(19) Europäisches Patentamt
European Patent Office
Office européen des brevets

(11) **EP 3 902 128 B1**

(12) **EUROPÄISCHE PATENTSCHRIFT**

(45) Veröffentlichungstag und Bekanntmachung des Hinweises auf die Patenterteilung:
**06.11.2024  Patentblatt 2024/45**

(21) Anmeldenummer: **20170296.6**

(22) Anmeldetag: **20.04.2020**

(51) Internationale Patentklassifikation (IPC):
*H02M 1/14* (2006.01)  *H02M 1/15* (2006.01)
*H02M 1/42* (2007.01)  *H02M 1/00* (2006.01)
*H02M 7/483* (2007.01)

(52) Gemeinsame Patentklassifikation (CPC):
**H02M 1/15; H02M 7/4835;** H02M 1/0048;
Y02B 70/10

(54) **UMRICHTER UND VERFAHREN ZU DEREN BETRIEB**

CONVERTER AND METHOD FOR ITS OPERATION

ONDULEUR ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.10.2021  Patentblatt 2021/43**

(73) Patentinhaber: **Siemens Energy Global GmbH & Co. KG**
**81739 München (DE)**

(72) Erfinder:
- **Schuster, Dominik**
  **91456 Diespeck (DE)**
- **Burkhardt, Matthias**
  **91052 Erlangen (DE)**
- **Semmler, Sebastian**
  **90427 Nürnberg (DE)**

(56) Entgegenhaltungen:
**WO-A1-2013/071947**

- **PICAS R ET AL: "Optimal injection of harmonics in circulating currents of modular multilevel converters for capacitor voltage ripple minimization", 2013 IEEE ECCE ASIA DOWNUNDER, IEEE, 3 June 2013 (2013-06-03), pages 318 - 324, XP032475513, ISBN: 978-1-4799-0483-9, [retrieved on 20130813], DOI: 10.1109/ECCE-ASIA.2013.6579115**

**Beschreibung**

Die Erfindung bezieht sich auf Umrichter, insbesondere Multilevelumrichter, und Verfahren zu deren Betrieb.

Multilevelumrichter sind beispielsweise aus der Druckschrift "Modular Multilevel Converter: An universal concept for HVDC-Networks and extended DC-Bus-applications" (R. Marquardt, The 2010 International Power Electronics Conference, 978-1-4244-5393-1/10, 2010 IEEE) bekannt. Der dort beschriebene Multilevelumrichter umfasst drei parallel geschaltete Reihenschaltungen, deren äußere Anschlüsse Gleichspannungsanschlüsse des Multilevelumrichters bilden. Jede der parallel geschalteten Reihenschaltungen umfasst jeweils mindestens zwei in Reihe geschaltete Teilmodule, die jeweils mindestens zwei Schalter und einen Kondensator umfassen. Durch eine geeignete Ansteuerung der Schalter lässt sich das Spannungsniveau an den Gleichspannungsanschlüssen einstellen.

Aus der Druckschrift "Loss optimization of MMC by Second-order-Harmonic Circulating Injection" (Yang, Li, Li, Wang, Xu, Gou, IEEE Transactions on Power Electronics, DOI 10.1109/TPEL.2017.2751068) ist ein Verfahren mit den Merkmalen gemäß dem Oberbegriff des Patentanspruchs 1 bekannt. Bei dem vobekannten Verfahren wird mit dem Ziel einer Reduktion der elektrischen Verluste im Umrichter ein zusätzlicher, nur innerhalb des Umrichters fließender, Kreisstrom erzeugt, der die doppelte - bezogen auf die Grundfrequenz des Umrichters - Frequenz aufweist und nachfolgend zweite Stromharmonische genannt wird.

Ein Verfahren zum Betreiben eines Multilevelumrichters ist aus der WO 2013/071947 A1 bekannt. Bei dem bekannten Verfahren steuert eine Steuereinrichtung Schaltmodule des Umrichters derart an, dass in jeder Reihenschaltung des Umrichters mindestens eine zusätzliche Kreis-Stromoberschwingung fließt. Der Erfindung liegt die Aufgabe zugrunde, ein Verfahren der beschriebenen Art weiter zu verbessern.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass durch Ansteuerung der Teilmodule ein zusätzlicher, innerhalb des Umrichters fließender, Kreisstrom - nachfolgend vierte Stromharmonische genannt - erzeugt wird, der die vierfache Grundfrequenz aufweist.

Ein wesentlicher Vorteil des erfindungsgemäßen Verfahrens besteht darin, dass - verglichen mit der Aufschaltung allein der zweiten Stromharmonischen - durch die zusätzliche Aufschaltung der vierten Stromharmonischen die elektrischen Verluste noch weiter reduziert werden können. Alternativ oder zusätzlich ist es möglich, den Peakstrom (Spitzenstrom) im Umrichter bzw. die maximale Amplitude der Zweigströme mit Hilfe der vierten Stromharmonischen zu reduzieren.

Vorteilhaft ist es, wenn die elektrischen Verluste des Umrichters durch die vierte Stromharmonische auf ein Maß reduziert werden, das kleiner ist als bei einem Betrieb des Umrichters allein mit der ersten und zweiten Stromharmonischen.

Durch die Ansteuerung der Teilmodule wird vorzugsweise die Phasenlage der zweiten Stromharmonischen relativ zur Phase der ersten Stromharmonischen konstant gehalten.

Vorzugsweise erfolgt die Ansteuerung der Teilmodule derart, dass die Maxima der ersten Stromharmonischen jeweils mit einem Maximum der zweiten Stromharmonischen zusammenfallen, wenn der Gleichstromanteil in den Zweigströmen positiv ist, und die Minima der ersten Stromharmonischen jeweils mit einem Minimum der zweiten Stromharmonischen zusammenfallen, wenn der Gleichstromanteil in den Zweigströmen negativ ist.

Für eine cosinusförmige Grundschwingung bzw. cosinusförmige erste Stromharmonische gemäß

$$Iz1 = Az1 \cos(\omega t) \quad \text{mit } Az1 > 0$$

wobei Iz1 die erste Stromharmonische, Az1 die Amplitude der ersten Stromharmonischen, $\omega$ die Kreisfrequenz des Stromes und t die Zeit bezeichnet,

gilt also vorzugsweise:

$$Iz2(t) = \text{sign}(Izdc) \cdot Az2 \cdot \cos(2\omega t) \quad \text{mit } Az2 > 0$$

wobei Iz2 die zweite Stromharmonische, Az2 die Amplitude der zweiten Stromharmonischen und Izdc den Gleichstromanteil in dem jeweiligen Zweigstrom bezeichnet.

Mit anderen Worten ist es vorteilhaft, wenn die zweite Stromharmonische Iz2 - im Cosinussystem - genau phasengleich zur ersten Stromharmonischen Iz1 aufgeschaltet und mit der Stromrichtung des Gleichstromanteils Izdc des Zweigstromes Iz multipliziert wird. Die aufgeschaltete zweite Stromharmonische Iz2 ist damit so aufgeschaltet, dass sie den innerhalb der Netzperiode auftretenden, maximalen Betragswert bzw. Betragspeak des natürlichen Zweigstroms um genau die Amplitude Az2 der zweiten Stromharmonischen Iz2 vergrößert.

Durch die Ansteuerung der Teilmodule wird vorzugsweise auch die Phasenlage der vierten Stromharmonischen relativ zur Phase der ersten Stromharmonischen konstant gehalten.

Bezüglich der vierten Stromharmonischen wird es als vorteilhaft angesehen, wenn die Ansteuerung der Teilmodule derart erfolgt, dass die Maxima der ersten Stromharmonischen jeweils mit einem Minimum der vierten Stromharmonischen zusammenfallen, wenn der Gleichstromanteil in den Zweigströmen positiv ist, und die Minima der ersten Stromharmonischen jeweils mit einem Maximum der vierten Stromharmonischen zusammenfallen, wenn der Gleichstromanteil in den Zweigströmen negativ ist.

Für eine cosinusförmige Grundschwingung bzw. cosinusförmige erste Stromharmonische wird die Phasenlage also vorzugsweise so eingestellt, dass folgende Beziehung erfüllt ist:

$$\mathrm{Iz4(t) = - sign(Izdc) \cdot Az4 \cdot cos(4\omega t) \quad mit \ Az4 > 0}$$

wobei Iz4 die vierte Stromharmonische und Az4 die Amplitude der vierten Stromharmonischen bezeichnet.

Die vierte Stromharmonische Iz4 wird - im Cosinussystem der Grundschwingung - also invers zur zweiten Stromharmonischen Iz2 aufgeschaltet. Sie verringert damit den maximalen Betragswert des natürlichen Zweigstroms um den Amplitudenwert Az4 der vierten Stromharmonischen Iz4.

Für den resultierenden Zweigstrom Iz ergibt sich damit:

$$\mathrm{Iz(t) = Izdc + Az1 \cdot cos(\omega t) + sign(Izdc) \cdot Az2 \cdot cos(2\omega t)}$$
$$\mathrm{- sign(Izdc) \cdot Az4 \cdot cos(4\omega t)}$$

Durch die mit fixierter, relativer Phasenlage invers aufgeschaltete vierte Stromharmonische lässt sich der Zweigstrompeak - im Vergleich zur alleinigen Aufschaltung nur der zweiten Stromharmonischen - stark reduzieren. Außerdem ist durch die fixierte, relative Phasenlage der zweiten und vierten Stromharmonischen der Peakwert des Zweigstromes stets einfach bestimmbar: Der Peakwert entspricht der Summe aus dem DC-Anteil und den Amplituden der ersten und zweiten Stromharmonischen, abzüglich der Amplitude der vierten Stromharmonischen.

Das Amplitudenverhältnis zwischen der Amplitude der vierten Stromharmonischen und der Amplitude der zweiten Stromharmonischen wird durch die Ansteuerung der Teilmodule vorzugsweise konstant gehalten.

Vorteilhaft ist es, wenn durch die Ansteuerung der Teilmodule das Amplitudenverhältnis zwischen der Amplitude der vierten Stromharmonischen und der Amplitude der zweiten Stromharmonischen in einem Bereich zwischen 0,4 und 0,7 gehalten wird. Die resultierende Aufschaltung der Stromharmonischen ist bei der letztgenannten Variante sehr einfach durchführbar; denn sie kann über eine einzige Größe, die Amplitude der zweiten Stromharmonischen eingestellt und geführt werden. Die vierte Stromharmonische folgt über einen festen Faktor k.

Der Wert, auf den das Amplitudenverhältnis zwischen der Amplitude der zweiten Stromharmonischen und der Amplitude der ersten Stromharmonischen geregelt wird, wird vorzugsweise derart gewählt, dass die elektrischen Verluste des Umrichters minimal werden.

Vorteilhaft ist es, wenn durch die Ansteuerung der Teilmodule das Amplitudenverhältnis zwischen der Amplitude der zweiten Stromharmonischen und der Amplitude der ersten Stromharmonischen auf einen Wert geregelt wird, der vom Arbeitspunkt des Umrichters abhängig ist. Der Arbeitspunkt wird vorzugsweise durch Spannungen, Ströme, Leistung und/oder Blindleistung des Umrichters definiert.

Vorteilhaft ist es insbesondere, wenn durch die Ansteuerung der Teilmodule das Amplitudenverhältnis zwischen der Amplitude der zweiten Stromharmonischen und der Amplitude der ersten Stromharmonischen auf einen Wert geregelt wird, der vom Leistungsfaktor des Umrichters abhängig ist. Bei einer bevorzugten Variante wird das Amplitudenverhältnis durch Multiplikation des Leistungsfaktors des Umrichters mit einer Konstanten gebildet.

Besonders vorteilhaft ist es, wenn der Wert, auf den das Amplitudenverhältnis zwischen der Amplitude der zweiten Stromharmonischen und der Amplitude der ersten Stromharmonischen geregelt wird, im Rahmen vorheriger Simulationen des Umrichters für verschiedene Arbeitspunkte als optimal ermittelt worden ist, und zwar insbesondere mit Blick auf minimale elektrische Verluste des Umrichters im jeweiligen Arbeitspunkt.

Ein geeignetes bzw. optimales Amplitudenverhältnis kann beispielsweise durch Simulationsrechnungen in Form eines Kennfeldes oder einer Kennlinie für verschiedene Arbeitspunkte des Umrichters ermittelt und abgespeichert werden. Hierzu kann z. B. für eingestellte bzw. vorgegebene Arbeitspunkte das Amplitudenverhältnis Az2/Az1 variiert und die jeweils auftretenden Umrichterverluste berechnet werden. Dasjenige Amplitudenverhältnis Az2/Az1, das für den jeweiligen Arbeitspunkt (z. B. definiert durch Wirk- und Blindleistung des Umrichters) zu den geringsten Verlusten führt und/oder gleichzeitig andere Randbedingungen (z. B. betreffend des Unterschreitens einer maximalen Amplitude des Zweigstromes Iz) erfüllt, wird in das Kennfeld eingetragen und später im Betrieb des Umrichters wieder ausgelesen.

Besonders einfach lässt sich das Verfahren durchführen, wenn der Wert, auf den das Amplitudenverhältnis zwischen der Amplitude der zweiten Stromharmonischen und der Amplitude der ersten Stromharmonischen geregelt wird, aus einem Speicher ausgelesen wird, in dem für verschiedene Arbeitspunkte der jeweils einzustellende Wert abgespeichert ist.

Der Umrichter ist vorzugsweise mit zumindest einem Wechselspannungsanschluss, an dem ein Wechselstrom eingespeist oder entnommen werden kann, und zumindest einem Gleichspannungsanschluss, an dem ein Gleichstrom eingespeist oder entnommen werden kann, ausgestattet. Zumindest zwei parallel geschaltete Reihenschaltungen bilden vorzugsweise äußere Gleichspannungsanschlüsse des Umrichters.

Vorteilhaft ist es, wenn durch die Ansteuerung der Teilmodule das Amplitudenverhältnis zwischen der Amplitude der zweiten Stromharmonischen und der Amplitude der ersten Stromharmonischen auf einen Wert geregelt wird, der in Abhängigkeit vom jeweiligen Energiefluss, insbesondere Wirkleistungsfluss und/oder Blindleistungsfluss, zwischen der Gleichspannungsseite bzw. den Gleichspannungsanschlüssen und der Wechselspannungsseite bzw. den Wechselspannungsanschlüssen des Unrichters ausgesucht bzw. bestimmt wird.

Als Umrichter wird bevorzugt ein Sechspuls-Multilevelumrichter betrieben.

Die Erfindung bezieht sich darüber hinaus auf einen Umrichter, insbesondere Multilevelumrichter, der zumindest zwei mit Teilmodulen ausgestattete Modulzweige sowie eine Steuereinrichtung aufweist, die durch Ansteuerung der Teilmodule in den Modulzweigen jeweils einen Strom - nachfolgend erste Stromharmonische genannt - erzeugt, der eine vorgegebene Grundfrequenz aufweist, und durch Ansteuerung der Teilmodule des Umrichters einen zusätzlichen, innerhalb des Umrichters fließenden, Kreisstrom - nachfolgend zweite Stromharmonische genannt - erzeugt, der die doppelte Grundfrequenz aufweist.

Erfindungsgemäß ist vorgesehen, dass die Steuereinrichtung derart ausgestaltet ist, dass sie durch Ansteuerung der Teilmodule einen zusätzlichen, innerhalb des Umrichters fließenden Kreisstrom - nachfolgend vierte Stromharmonische genannt - erzeugt, der die vierfache Grundfrequenz aufweist.

Bezüglich der Vorteile des erfindungsgemäßen Umrichters sei auf die oben erläuterten Vorteile des erfindungsgemäßen Verfahrens verwiesen, da die Vorteile des erfindungsgemäßen Verfahrens denen des erfindungsgemäßen Umrichters im Wesentlichen entsprechen.

Als vorteilhaft wird es angesehen, wenn die Steuereinrichtung die elektrischen Verluste des Umrichters und/oder den Maximalwert des Betrags der Zweigströme durch die vierte Stromharmonische reduziert, sodass diese kleiner sind als bei einem Betrieb des Umrichters allein mit der ersten und zweiten Stromharmonischen.

Die Erfindung wird nachfolgend anhand von Ausführungsbeispielen näher erläutert; dabei zeigen beispielhaft

Figur 1 ein Ausführungsbeispiel für einen erfindungsgemäßen Umrichter,

Figur 2 ein Ausführungsbeispiel für ein Teilmodul, das zur Bildung von Modulzweigen bei dem Umrichter gemäß Figur 1 eingesetzt werden kann,

Figur 3 ein weiteres Ausführungsbeispiel für ein Teilmodul, das zur Bildung von Modulzweigen bei dem Umrichter gemäß Figur 1 eingesetzt werden kann,

Figur 4 einen Verlauf der zweiten und vierten Stromharmonischen relativ zur ersten Stromharmonischen und relativ zum natürlichen Zweigstrom für einen positiven Gleichstromanteil,

Figur 5 einen Verlauf der zweiten und vierten Stromharmonischen relativ zur ersten Stromharmonischen und relativ zum natürlichen Zweigstrom für einen negativen Gleichstromanteil,

Figur 6 ein zweidimensionales Kennfeld zur Bestimmung eines geeigneten bzw. optimalen Amplitudenverhältnisses zwischen der Amplitude der ersten Stromharmonischen und der Amplitude der zweiten Stromharmonischen in Abhängigkeit vom Wirk- und Blindstrom und

Figur 7 eine Kennlinie zur Bestimmung eines geeigneten bzw. optimalen Amplitudenverhältnisses zwischen der Amplitude der ersten Stromharmonischen und der Amplitude der zweiten Stromharmonischen in Abhängigkeit vom Wirkstrom.

In den Figuren werden der Übersicht halber für identische oder vergleichbare Komponenten stets dieselben Bezugzeichen verwendet.

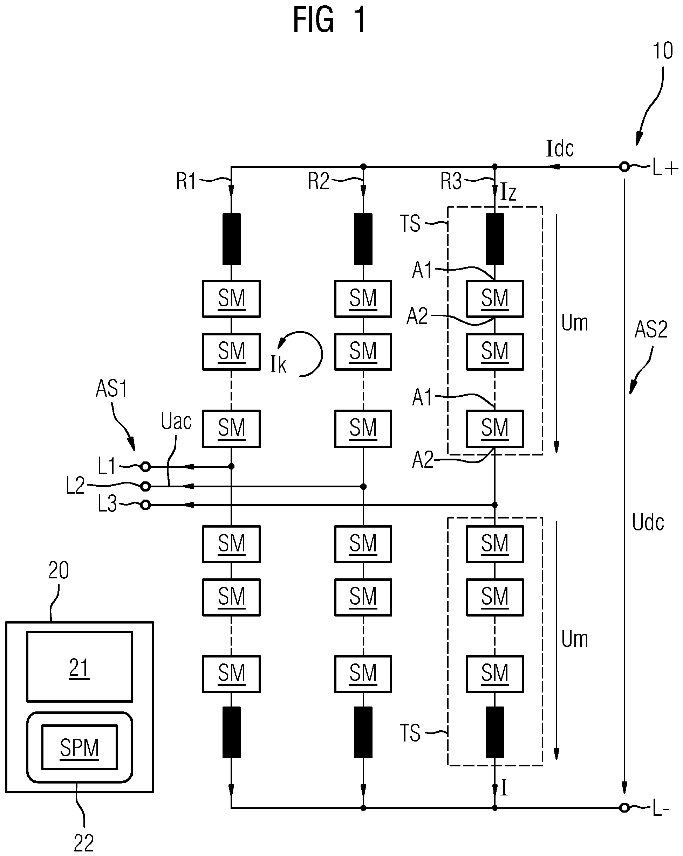

Die Figur 1 zeigt einen Umrichter 10, der auf seiner ersten Anschlussseite (Wechselspannungsseite) AS1 drei Wechselspannungsanschlüsse L1, L2 und L3 aufweist, an denen jeweils ein Wechselstrom in den Umrichter 10 eingespeist oder aus diesem entnommen werden kann. Auf einer zweiten Anschlussseite (Gleichspannungsseite) AS2 befinden sich zwei Gleichspannungsanschlüsse, an denen ein Gleichstrom Idc in den Umrichter 10 eingespeist oder aus diesem entnommen werden kann; diese sind in der Figur 1 mit dem Bezugszeichen L+ und L- gekennzeichnet.

Die Gleichspannung zwischen den Gleichspannungsanschlüssen L+ und L- trägt das Bezugszeichen Udc. Die jeweils zwischen den Wechselspannungsanschlüssen L1, L2 und L3 anliegende Wechselspannung trägt das Bezugszeichen Uac.

Der Umrichter 10 weist drei Reihenschaltungen R1, R2 und R3 auf, deren äußere Anschlüsse die Gleichspannungsanschlüsse L+ und L- des Umrichters 10 bilden. Die Reihenschaltungen R1, R2 und R3 umfassen jeweils zwei in Reihe geschaltete Modulzweige TS.

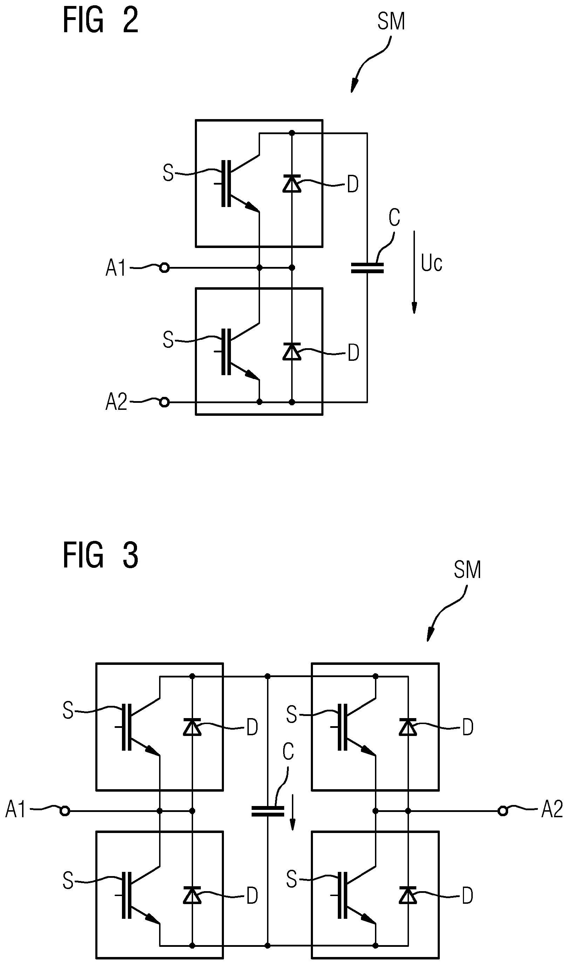

Jeder der Modulzweige TS weist jeweils mindestens zwei in Reihe geschaltete Teilmodule SM auf, die jeweils mindestens zwei Schaltelemente und einen Kondensator umfassen. Ausführungsbeispiele für geeignete Teilmodule SM werden nachfolgend beispielhaft im Zusammenhang mit den Figuren 2 und 3 erläutert.

Der Umrichter 10 weist eine Steuereinrichtung 20 auf, die zur Ansteuerung der Teilmodule SM und damit zur Ansteuerung der Modulzweige TS geeignet ist. Die Steuereinrichtung 20 weist zu diesem Zweck eine Recheneinrichtung 21 sowie einen Speicher 22 auf. In dem Speicher 22 ist ein Steuerprogrammmodul SPM gespeichert, das die Arbeitsweise der Recheneinrichtung 21 bestimmt.

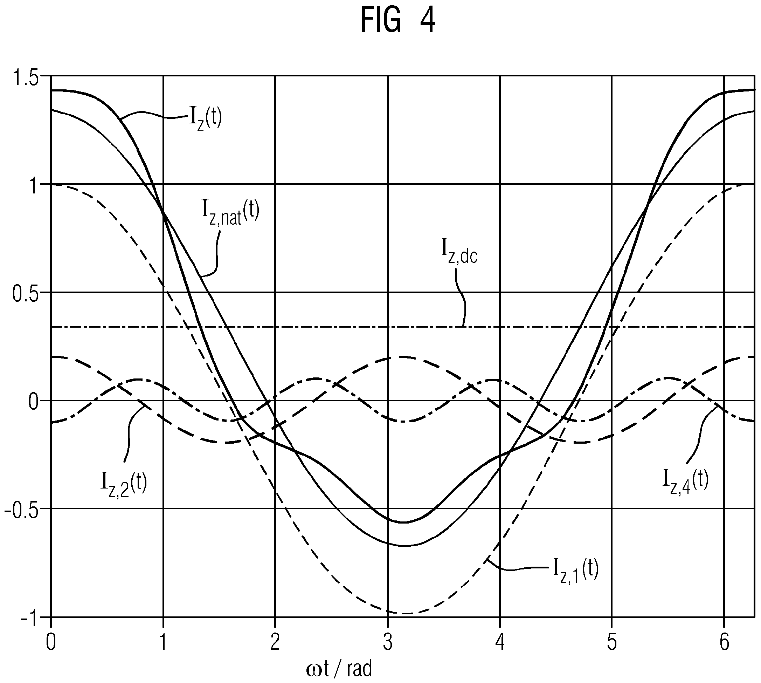

Ein mögliches Betriebsverfahren für den Umrichter 10 wird weiter unten im Zusammenhang mit den Figuren 4 bis 7 näher erläutert.

Die Figur 2 zeigt ein Ausführungsbeispiel für ein Teilmodul SM, das zwei Schaltelemente S in Form von Transistoren, denen jeweils eine Diode D parallel (bzw. antiparallel) geschaltet ist, sowie als Energiespeicher einen Kondensator C umfasst. Die genannten Komponenten bilden eine Halbbrückenschaltung, die durch Ansteuern der Schaltelemente S - seitens der Steuereinrichtung 20 gemäß Figur 1 - einen unipolaren Betrieb des Kondensators C ermöglicht. Die Transistoren und die jeweils parallel geschalteten Dioden D können vorgefertigte Bauteile sein, wie in den Figuren zeichnerisch durch Kästen angedeutet ist; die Transistoren und die jeweils parallel geschalteten Dioden D können beispielsweise IGBT-Bauelemente sein.

Im aktiven Betrieb des Teilmoduls SM ist jeweils eines der beiden Schaltelemente S eingeschaltet und das andere Schaltelement S ausgeschaltet. Ist das in der Figur 2 obere Schaltelement S ein- und das untere Schaltelement S ausgeschaltet, so ist der Kondensator C zwischen die zwei Anschlüsse A1 und A2 geschaltet und elektrisch aktiv; ist das in der Figur 2 obere Schaltelement aus- und das untere Schaltelement eingeschaltet, so ist der Kondensator C überbrückt und durch die Dioden von den zwei Anschlüssen A1 und A2 getrennt.

Im passiven Betrieb des Teilmoduls SM sind beide Schaltelemente S ausgeschaltet.

Die Figur 3 zeigt ein Ausführungsbeispiel für ein Teilmodul SM, das vier Schaltelemente S in Form von Transistoren, denen jeweils eine Diode parallel geschaltet ist, sowie als Energiespeicher einen Kondensator C umfasst. Die genannten Komponenten bilden eine Vollbrückenschaltung, die durch Ansteuern der Schaltelemente S - seitens der Steuereinrichtung 20 gemäß Figur 1 - einen bipolaren Betrieb des Kondensators C ermöglicht.

Im aktiven Betrieb des Teilmoduls SM gemäß Figur 3 sind jeweils zwei der vier Schaltelemente S eingeschaltet und die beiden anderen ausgeschaltet. Im passiven Betrieb des Teilmoduls SM gemäß Figur 3 sind alle vier Schaltelemente S ausgeschaltet.

Bevorzugte Arbeitsweisen des Steuerprogrammmoduls SPM sollen nachfolgend beispielhaft beschrieben werden:

In bekannter Weise werden die Teilmodule SM in jedem der Modulzweige bezüglich der Grundfrequenz des Umrichters, beispielsweise bezüglich der Grundfrequenz von 50 Hz oder 60 Hz, derart angesteuert, dass ein gewünschter Energiefluss zwischen den Anschlussseiten AS1 und AS2 auftritt bzw. gewünschte Wechselströme auf der ersten Anschlussseite AS1 und ein gewünschter Gleichstrom Idc auf der zweiten Anschlussseite AS2 fließt. Die in den Modulzweigen fließenden Ströme mit der Grundfrequenz werden nachfolgend erste Stromharmonische genant.

Darüber hinaus werden die Teilmodule SM in den Modulzweigen derart angesteuert, dass umrichterinterne Kreisströme fließen, also Ströme, die nur in den Zweigen des Umrichters 10 zirkulieren und den Umrichter 10 nach außen hin nicht verlassen, also weder auf der ersten noch auf der zweiten Anschlussseite AS1 bzw. AS2 sichtbar sind. Die umrichterinternen Kreisströme sind in der Figur 1 mit einem Pfeil mit dem Bezugszeichen Ik gekennzeichnet.

Das sogenannte Aufschalten von umrichterinternen Kreisströmen und die diesbezüglichen Maßnahmen hinsichtlich der Ansteuerung der Teilmodule SM sind allgemein bekannt, sodass diesbezüglich auf die Literatur verwiesen sei. So ist beispielsweise aus der bereits eingangs genannten Druckschrift "Loss optimization of MMC by Second-order-Harmonic Circulating Injection" (Yang, Li, Li, Wang, Xu, Gou, IEEE Transactions on Power Electronics, DOI 10.1109/TPEL.2017.2751068) ein Aufschalten von Kreisströmen mit doppelter Grundfrequenz, also der zweiten Stromharmonischen, bekannt.

Wie nachfolgend beispielhaft näher im Detail beschrieben wird, wird das Steuerprogrammmodul SPM die Schalter der Teilmodule SM derart ansteuern, dass nicht nur eine zweite Stromharmonische, sondern zusätzlich auch eine vierte Stromharmonische in den Kreisströmen vorhanden ist. Die nachfolgenden Erläuterungen beziehen sich auf den Zweigstrom Iz in dem in der Figur 1 oberen Modulzweig TS der rechten Reihenschaltung R3; sie gelten jedoch für die anderen Modulzweige TS im Umrichter 10 entsprechend.

Nachfolgend wird beispielhaft davon ausgegangen, dass die erste Stromharmonische Iz1 im Zweigstrom Iz cosinusförmig ist, also Folgendes gilt:

$$Iz1 = Az1 \cos(\omega t),$$

wobei Az1 die Amplitude der ersten Stromharmonischen Iz1 bezeichnet und ein positives Vorzeichen aufweist bzw. größer als Null ist. $\omega$ bezeichnet die Kreisfrequenz des Stromes und t die Zeit.

Die obige Annahme eines cosinusförmigen Verlaufs ist hier nur zum Zwecke der Erläuterung gewählt und bezieht sich auf eine entsprechend willkürlich gewählte Zeitbasis. Im Falle einer anderen Zeitbasis wäre die erste Stromharmonische nicht cosinusfömig, sondern dazu phasenverschoben, beispielsweise sinusförmig. Für die nachfolgenden Erläuterungen ist dies jedoch irrelevant, bei einer anderen Zeitbasis muss in der Formel nur die jeweilige Phasenverschiebung zu dieser anderen jeweiligen Zeitbasis mathematisch berücksichtigt werden.

Da im Normalbetrieb, auch ohne Aufschaltung von weiteren Stromharmonischen, in den Modulzweigen üblicherweise ein Gleichstrom Izdc auftritt, führt dies zu einem sogenannten natürlichen Zweigstrom Iznat gemäß:

$$Iznat = Izdc + Az1 \cos(\omega t).$$

Durch eine Aufschaltung der zweiten Stromharmonischen Iz2 und der vierten Stromharmonischen Iz4 ergibt sich der resultierende Zweigstrom Iz zu:

$$Iz = Iznat + Iz2(t) + Iz4(t) \text{ bzw.}$$

$$Iz = Izdc + Az1 \cos(\omega t) + Iz2(t) + Iz4(t).$$

Bezüglich der Amplitude und der Phasenlage der zweiten Stromharmonischen Iz2 und der vierten Stromharmonischen Iz4 wird das Steuerprogrammmodul SPM vorzugsweise wie folgt vorgehen:

Zweite Stromharmonische:

Die Phasenlage der zweiten Stromharmonischen Iz2 wird vorzugsweise derart eingestellt, dass die Maxima der ersten Stromharmonischen Iz1 jeweils mit einem Maximum der zweiten Stromharmonischen Iz2 zusammenfallen, wenn der Gleichstromanteil Idc in dem Zweigstrom Iz positiv ist, und die Minima der ersten Stromharmonischen Iz1 jeweils mit einem Minimum der zweiten Stromharmonischen Iz2 zusammenfallen, wenn der Gleichstromanteil Idc in den Zweigstrom Iz negativ ist. Die Phasenlage wird also so eingestellt, dass folgende Beziehung erfüllt ist:

$$Iz2(t) = \text{sign}(Izdc) \cdot A2z \cdot \cos(2\omega t) \quad \text{mit } A2z > 0$$

Die zweite Stromharmonische Iz2 wird - im Cosinussystem - genau "phasengleich" (bezogen auf den Zeitpunkt t=0) zur ersten Stromharmonischen Iz1 aufgeschaltet und mit der Stromrichtung des Gleichstromanteils Idc des Zweigstromes Iz multipliziert. Die aufgeschaltete zweite Stromharmonische Iz2 ist damit so aufgeschaltet, dass sie den innerhalb der Netzperiode auftretenden, maximalen Betragswert bzw. Betragspeak des natürlichen Zweigstroms Iznat um genau die Amplitude Az2 der zweiten Stromharmonischen Iz2 vergrößert.

Die Figur 4 zeigt einen beispielhaften Verlauf der zweiten Stromharmonischen Iz2 relativ zur ersten Stromharmonischen Iz1 und relativ zum natürlichen Zweigstrom Iznat für einen positiven Gleichstromanteil Izdc.

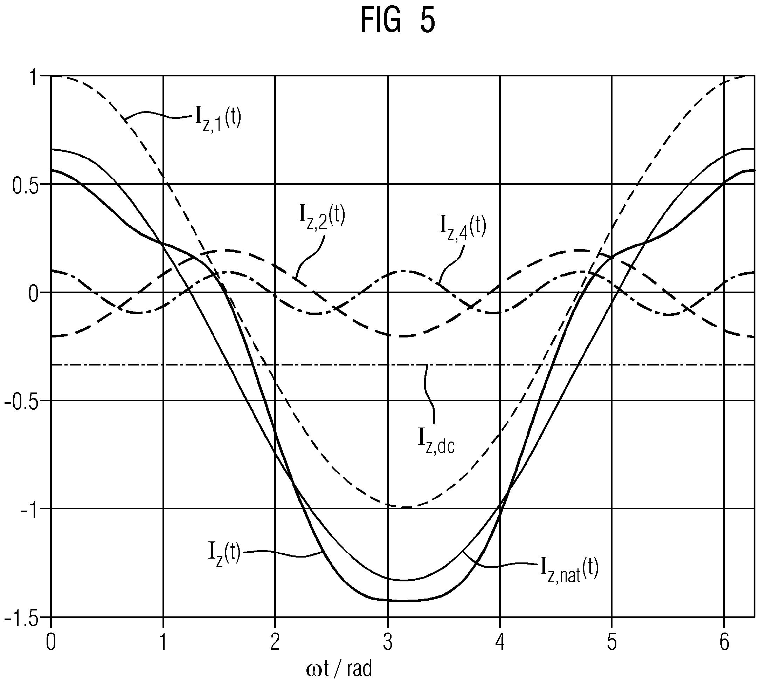

Die Figur 5 zeigt einen beispielhaften Verlauf der zweiten Stromharmonischen Iz2 relativ zur ersten Stromharmonischen Iz1 und relativ zum natürlichen Zweigstrom Iznat für einen negativen Gleichstromanteil Izdc.

Die Amplitude Az2 der zweiten Stromharmonischen Iz2 wird vorzugsweise in Abhängigkeit von der Amplitude Az1 der ersten Stromharmonischen Iz1 eingestellt. Diesbezüglich werden folgende Varianten als vorteilhaft angesehen:

Variante 1:

Bei einer ersten Variante ist vorgesehen, dass durch die Ansteuerung der Teilmodule das Amplitudenverhältnis zwischen der Amplitude Az2 der zweiten Stromharmonischen Iz2 und der Amplitude Az1 der ersten Stromharmonischen Iz1 auf einen Wert geregelt wird, der vom Arbeitspunkt des Umrichters abhängig ist.

Vorteilhaft ist es beispielsweise, wenn das einzustellende Amplitudenverhältnis Az2/Az1 aus einem Kennfeld ausgelesen wird, bei dem das jeweilige Sollamplitudenverhältnis in Abhängigkeit von einer vom Umrichter einzustellenden bzw. bereits eingestellten Wirkleistung P (bzw. Wirkleistungsfluss zwischen der Gleichspannungsseite und der Wechselspannungsseite) und einer einzustellenden bzw. bereits eingestellten Blindleistung Q (bzw. Blindleistungsfluss zwischen der Gleichspannungsseite und der Wechselspannungsseite) aufgetragen ist.

Alternativ kann in vorteilhafter Weise vorgesehen sein, dass das einzustellende Amplitudenverhältnis Az2/Az1 aus einem Kennfeld ausgelesen wird, bei dem das jeweilige Sollamplitudenverhältnis in Abhängigkeit von einem vom Umrichter einzustellenden Wirkstrom Ip und einem einzustellenden bzw. bereits eingestellten Blindstrom Iq aufgetragen ist.

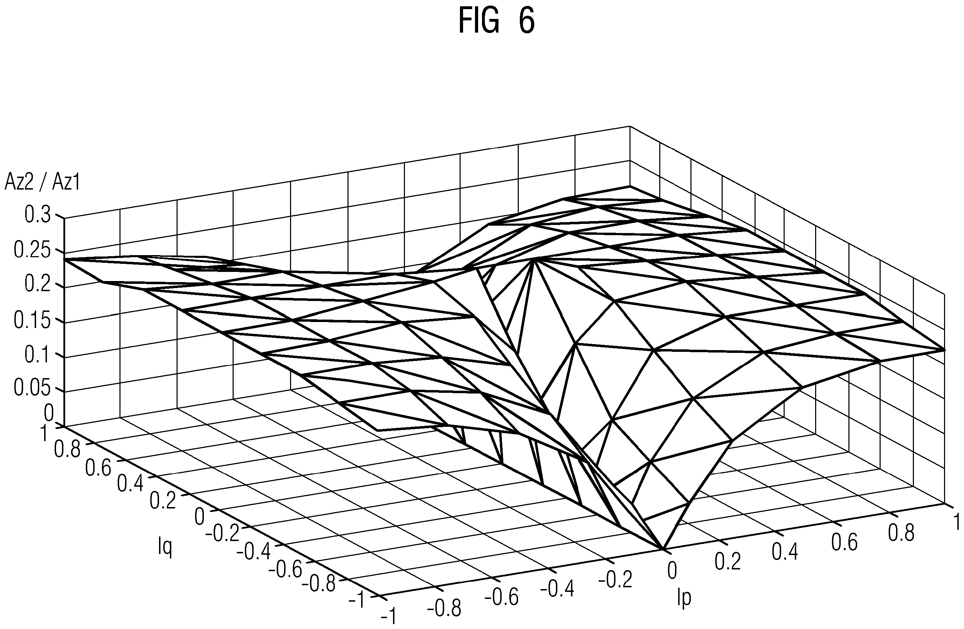

Die Figur 6 zeigt beispielhaft ein solches zweidimensionales Kennfeld in Abhängigkeit vom Wirkstrom Ip und Blindstrom Iq.

Im laufenden Betrieb des Umrichters 10 wird jeweils von der Konverterregelung bzw. dem Steuerprogrammmodul SPM gemäß Figur 1 anhand des vorliegenden Arbeitspunktes des Konverters, also anhand der jeweiligen Wirk- und Blindleistung oder anhand des jeweiligen Wirk- und Blindstromes, das korrespondierende Amplitudenverhältnis Az2/Az1 ausgelesen und nachfolgend eingestellt.

Das Kennfeld gemäß Figur 6 wird vorzugsweise vor Inbetriebnahme des Umrichters 10 projektspezifisch in Simulationen berechnet. Hierzu wird z. B. für eingestellte bzw. vorgegebene Stützstellen (Arbeitspunkte des Umrichters) das Amplitudenverhältnis Az2/Az1 variiert und es werden die auftretenden Umrichterverluste berechnet. Jenes Amplitudenverhältnis Az2/Az1, das zu den besten bzw. geringsten Verlusten führt und/oder gleichzeitig andere Randbedingungen (z. B. betreffend des Unterschreitens einer maximalen Amplitude des Zweigstromes Iz) erfüllt, wird in das Kennfeld eingetragen und steht dann für die Steuerung während des Betriebs des Umrichters zur Verfügung.

Ein Vorteil dieser ersten Variante besteht in einer sehr genauen Kontrolle, so können Grenzwerte für die Amplitude des Zweigstromes Iz arbeitspunktspezifisch berücksichtigt werden. Für Arbeitspunkte, die in dem Kennfeld zwischen Stützstellen liegen, kann das Amplitudenverhältnis Az2/Az1 beispielsweise durch Interpolation bestimmt werden.

Anstelle des in den Figuren 6 gezeigten zweidimensionalen Kennfeldes kann auch ein mehrdimensionales Kennfeld gebildet und später für die Bestimmung des Amplitudenverhältnisses Az2/Az1 herangezogen werden, wenn mehr als zwei Betriebsparameter des Umrichters 10 berücksichtigt werden sollen.

Variante 2:

Bei einer zweiten Variante ist vorgesehen, dass das Amplitudenverhältnis Az2/Az1 zwischen der Amplitude Az2 der zweiten Stromharmonischen Iz2 und der Amplitude Az1 der ersten Stromharmonischen Iz1 ermittelt wird durch Auswerten einer eindimensionalen Kennlinie und einer nachfolgenden Multiplikation eines anhand der eindimensionalen Kennlinie ermittelten Zwischenwerts ZW mit einem Leistungsfaktor $\cos(\varphi)$.

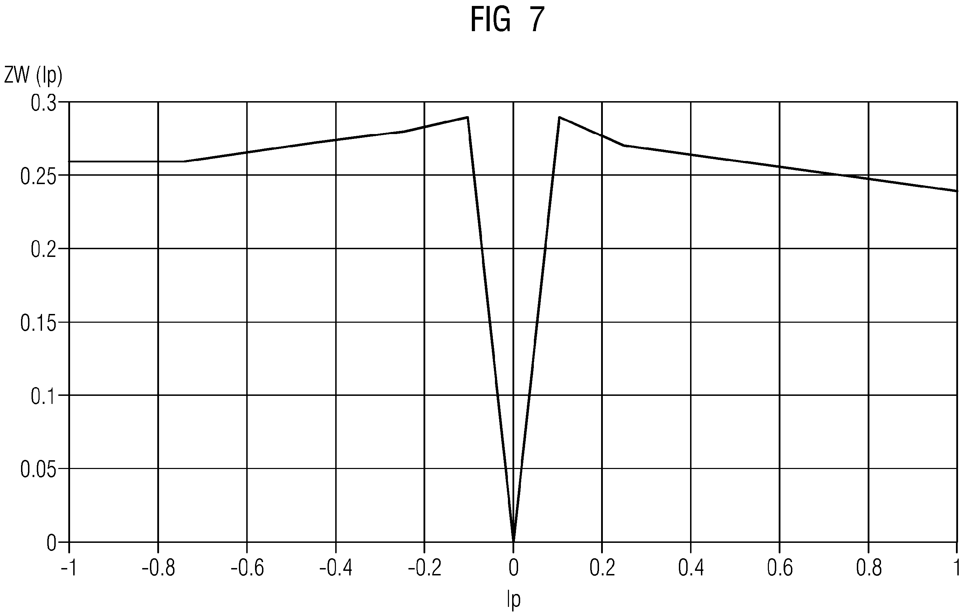

Die Figur 7 zeigt beispielhaft eine solche eindimensionale Kennlinie für den Zwischenwert ZW in Abhängigkeit von dem Wirkstrom Ip. Alternativ kann die eindimensionale Kennlinie für den Zwischenwert ZW auch in Abhängigkeit von der Wirkleistung P aufgetragen sein.

Die eindimensionale Kennlinie wird vorzugsweise vor Inbetriebnahme des Umrichters 10 projektspezifisch für Arbeitspunkte ohne Blindleistung, also nur in Abhängigkeit von der Wirkleistung, in Simulationen berechnet. Hierzu wird z. B. für eingestellte bzw. vorgegebene Stützstellen der eindimensionalen Kennlinie das Amplitudenverhältnis Az2/Az1 variiert und es werden die auftretenden Umrichterverluste berechnet. Jenes Amplitudenverhältnis Az2/Az1, das zu den besten Verlusten führt und/oder gleichzeitig andere Randbedingungen (z. B. das Einhalten einer maximalen Amplitude des Zweigstromes Iz) erfüllt, wird in Form eines Zwischenwerts ZW in die eindimensionale Kennlinie eingetragen.

In der eindimensionalen Kennlinie sind - wie erwähnt - die optimalen Zwischenwerte ZW vorzugsweise nur für Arbeitspunkte ohne Blindleistung aufgetragen, also eindimensional über der Wirkleistung P oder dem Wirkstrom Ip, wobei die Blindleistung Q bzw. der Blindstrom Iq als Null angenommen bzw. festgesetzt wird.

Im laufenden Betrieb des Umrichters 10 wird jeweils von der Konverterregelung bzw. dem Steuerprogrammmodul SPM gemäß Figur 1 anhand des vorliegenden Arbeitspunktes des Konverters, hier also anhand der jeweiligen Wirkleistung P oder anhand des jeweiligen Wirkstromes Ip, der korrespondierende Zwischenwert ZW(P, Ip) ausgelesen. Für Arbeitspunkte, die in der Kennlinie zwischen Stützstellen liegen, kann der Zwischenwert ZW beispielsweise durch Interpolation bestimmt werden.

Anschließend wird, um die jeweilige Blindleistung Q zu berücksichtigen, der ausgelesene Zwischenwert ZW(P, Ip) mit dem jeweiligen Leistungsfaktor cos($\varphi$) des Umrichters 10 multipliziert, woraus sich das Amplitudenverhältnis Az2/Az1 ergibt gemäß:

$$\text{Az2/Az1} = \text{ZW(P,Ip)} \cdot \cos(\varphi)$$

$$\text{Az2/Az1} = \text{ZW(P,Ip)} \cdot \frac{P}{\sqrt{P^2+Q^2}}$$

wobei P die Wirkleistung und Q die Blindleistung bezeichnet.

Ein Vorteil dieser zweiten Variante besteht in einem reduzierten Aufwand, wobei dennoch ein gutes Ergebnis hinsichtlich einer Reduktion der elektrischen Verluste erreicht wird.

Variante 3:

Bei einer dritten Variante ist vorgesehen, dass zur Ermittlung des Amplitudenverhältnisses Az2/Az1 eine fest vorgegebene Konstante K mit dem jeweiligen Leistungsfaktor cos($\varphi$) des Umrichters 10 multipliziert wird gemäß:

$$\text{Az2/Az1} = \text{K} \cdot \cos(\varphi)$$

mit

$$\cos(\varphi) = \frac{P}{\sqrt{P^2+Q^2}}$$

Ein Vorteil dieser dritten Variante besteht in einem sehr geringen Aufwand, wobei dennoch ein akzeptables Ergebnis hinsichtlich einer Reduktion der elektrischen Verluste erreicht wird.

Vierte Stromharmonische:

Die Phasenlage der vierten Stromharmonischen wird vorzugsweise derart eingestellt, dass die Maxima der ersten Stromharmonischen Iz1 jeweils mit einem Minimum der vierten Stromharmonischen Iz4 zusammenfallen, wenn der Gleichstromanteil Idc in dem Zweigstrom Iz positiv ist, und die Minima der ersten Stromharmonischen Iz1 jeweils mit einem Maximum der vierten Stromharmonischen Iz4 zusammenfallen, wenn der Gleichstromanteil Idc in dem Zweigstrom Iz negativ ist. Die Phasenlage wird also so eingestellt, dass folgende Beziehung erfüllt ist:

$$\text{Iz4(t)} = - \text{sign(Izdc)} \cdot \text{A4z} \cdot \cos(4\omega t) \quad \text{mit A4z} > 0$$

Die vierte Stromharmonische Iz4 wird - im Cosinussystem - also invers zur zweiten Stromharmonischen Iz2 aufgeschaltet. Sie verringert damit den maximalen Betragswert des natürlichen Zweigstroms Iznat um den Amplitudenwert Az4 der vierten Stromharmonischen Iz4.

Es gibt bei der beschriebenen Vorgehensweise - abgesehen von der Richtungsumkehr in Abhängigkeit von der Stromrichtung des Gleichstromanteils Izdc - keine variable bzw. vom Arbeitspunkt des Umrichters 10 abhängige, veränderliche Phasenverschiebung zwischen den aufgeschalteten Stromharmonischen Iz2 und Iz4 relativ zur gegebenen Grundschwingung bzw. ersten Stromharmonischen Iz1.

Für den resultierenden Zweigstrom Iz ergibt sich damit:

$$\text{Iz(t)} = \text{Izdc} + \text{Az1} \cdot \cos(\omega t) + \text{sign(Izdc)} \cdot (\text{Az2} \cos(2\omega t) - \text{Az4} \cdot \cos(4\omega t))$$

Die bereits oben angesprochene Figur 4 zeigt auch einen beispielhaften Verlauf der vierten Stromharmonischen Iz4 relativ zur ersten und zweiten Stromharmonischen Iz1, Iz2 und relativ zum natürlichen Zweigstrom Iznat für einen positiven Gleichstromanteil Izdc.

Die Figur 5 zeigt einen beispielhaften Verlauf der vierten Stromharmonischen Iz4 relativ zur ersten und zweiten Stromharmonischen Iz1, Iz2 und relativ zum natürlichen Zweigstrom Iznat für einen negativen Gleichstromanteil Izdc.

Es lässt sich in den Figuren 4 und 5 erkennen, dass durch die mit fixierter Phasenlage invers aufgeschaltete vierte Stromharmonische Iz4 der Zweigstrompeak des Zweigstromes Iz - im Vergleich zur alleinigen Aufschaltung nur der zweiten Stromharmonischen Iz2 - stark reduziert wird.

Durch die fixierte Phasenlage der Stromharmonischen Iz2 und Iz4 ist der Peakwert des Zweigstromes Iz im Übrigen stets einfach bestimmbar; er kann durch Summieren des Gleichstromanteils Izdc und der Amplituden Az1 und Az2 der ersten und zweiten Stromharmonischen, abzüglich der Amplitude Az4 der vierten Stromharmonischen, gebildet werden.

Die Amplitude Az4 der vierten Stromharmonischen Iz4 wird vorzugsweise in Abhängigkeit von der Amplitude Az2 der zweiten Stromharmonischen Iz2 eingestellt. Diesbezüglich wird es als vorteilhaft angesehen, wenn das Amplitudenverhältnis Az4/Az2 zwischen der Amplitude Az4 der vierten Stromharmonischen und der Amplitude Az2 der zweiten Stromharmonischen konstant gehalten wird.

Besonders vorteilhaft ist es, wenn das Amplitudenverhältnis Az4/Az2 zwischen 0,4 und 0,7 eingestellt wird, also gilt:

$$0,4 \ \leq \ Az4/Az2 \ \leq \ 0,7$$

Optimal ist in der Regel ein Wert für Az4/Az2 von 0,5 ± 10%.

Die oben beispielhaft beschriebenen Verfahren zum Aufschalten einer zweiten und vierten Stromharmonischen können einzelne, mehrere oder alle der nachfolgend nochmals stichpunktartig aufgeführten Merkmale oder Vorteile aufweisen:

- Durch die Aufschaltung der zweiten und vierten Stromharmonischen werden die primär kritischen Größen wie Spitzenwert des Zweigstromes oder Effektivwert des Zweigstromes nur wenig vergrößert oder lassen sich sogar reduzieren.
- Eine ungünstige Spannungsrückwirkung über die Zweigdrosseln lässt sich reduzieren.
- Es wird eine übersichtliche Kompensation der Spannungsrückwirkung ermöglicht.
- Das Verfahren ist einfach realisierbar.
- Mit der beschriebenen Methodik der Aufschaltung lässt sich gemäß Simulationsrechnungen eine Verlustreduzierung von 98% - bezogen auf die "optimale", also theoretisch maximal mögliche Verlustreduzierung - erreichen.
- Die Erhöhung des Spitzenwertes (Peak- und "rms"-Wert) des Zweigstromes ist einfach bestimmbar; bei gegebenem, maximal zulässigem Spitzenwert ist die zulässige Stärke der Anwendung des Verfahrens (z. B. durch Wahl der Größe der Amplituden Az4 und Az2) leicht bestimmbar.
- Die Spannungsrückwirkung ist einfach bestimmbar.
- Die regelungstechnische Umsetzung ist einfach.
- Das Verfahren ist mit nur einer Führungsgröße ausführbar.
- Der Zweigstrompeak als auslegungstechnisch kritische Größe kann sehr einfach berechnet werden.
- Die Rückwirkung auf die Kondensatormodulspannung ist einfach berechenbar.
- In Multilevelumrichtern (MMC) in Sechspuls-Schaltung mit Halbbrückensubmodulen tritt in allen Arbeitspunkten mit Wirkleistung eine Verlust- und Energiehubreduzierung ein, auch wenn nur geringe, zusätzliche Amplituden aufgeschaltet werden bzw. werden können.
- Es lässt sich die Gefahr reduzieren, dass der Umrichter aufgrund von Spannungsrückwirkung außer Kontrolle gerät bzw. in den ungesteuerten B6-Betrieb gelangt.
- Verglichen mit der Aufschaltung allein einer zweiten Stromharmonischen können durch die zusätzliche Aufschaltung der vierten Stromharmonischen Halbleiterschalter mit kleinerer Stromtragfähigkeit eingesetzt werden, als dies bei einer Aufschaltung allein der zweiten Stromharmonischen möglich wäre.
- Der Umrichter kann mit einem größeren, äußeren Modulationsindex (Verhältnis von AC- zu halber DC-Spannung) betrieben werden, als dies mit der Aufschaltung allein der zweiten Stromharmonischen möglich wäre.
- Die feste Phasenlage der Stromharmonischen und das ggf. fest eingestellte Amplitudenverhältnis erlauben eine einfache Berechnung der Spannungsrückwirkung über die Zweigdrosseln. Die dafür nötige Ableitung der Ströme nach der Zeit ist aufgrund der einfachen Zusammenhänge (Entfall individueller Phasenlagen der Stromharmonischen) relativ einfach und ggf. auch in Echtzeitsystemen realisierbar.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden. Der Schutzumfang der Erfindung ist nur von den Ansprüchen beschränkt.

**Patentansprüche**

1. Verfahren zum Betreiben eines Umrichters (10), insbesondere Multilevelumrichters, der zumindest zwei mit Teilmodulen (SM) ausgestattete Modulzweige (TS) aufweist,

   - wobei durch Ansteuerung der Teilmodule (SM) in den Modulzweigen jeweils ein Strom - nachfolgend erste Stromharmonische (Iz1) genannt - erzeugt wird, der eine vorgegebene Grundfrequenz aufweist, und
   - wobei durch Ansteuerung der Teilmodule (SM) ein zusätzlicher, innerhalb des Umrichters (10) fließender, Kreisstrom
   - nachfolgend zweite Stromharmonische (Iz2) genannt - erzeugt wird, der die doppelte Grundfrequenz aufweist, durch Ansteuerung der Teilmodule (SM) ein zusätzlicher, innerhalb des Umrichters (10) fließender, Kreisstrom
   - nachfolgend vierte Stromharmonische (Iz4) genannt - erzeugt wird, der die vierfache Grundfrequenz aufweist,
   **dadurch gekennzeichnet, dass**
   die zweite Stromharmonische (Iz2) mit einem Vorzeichen des Gleichstromanteils (Izdc) eines jeweiligen Zweigstromes (Iz) multipliziert und im Cosinussystem phasengleich zur ersten Stromharmonischen (Iz1) aufgeschaltet wird und die vierte Stromharmonische (Iz4) mit dem inversen Vorzeichen des Gleichstromanteils (Izdc) des jeweiligen Zweigstromes (Iz) multipliziert und im Cosinussystem phasengleich zur ersten Stromharmonischen aufgeschaltet wird, wobei ein maximaler Betragswert eines natürlichen Zweigstroms um einen Amplitudenwert (Az4) der vierten Stromharmonischen (Iz4) verringert wird.

2. Verfahren nach einem der voranstehenden Ansprüche, **dadurch gekennzeichnet, dass** die Phasenlage der zweiten Stromharmonischen (Iz2) relativ zur Phase der ersten Stromharmonischen (Iz1) konstant gehalten wird.

3. Verfahren nach einem der voranstehenden Ansprüche, **dadurch gekennzeichnet, dass** durch die Ansteuerung der Teilmodule (SM) bewirkt wird, dass

   - die Maxima der ersten Stromharmonischen (Iz1) jeweils mit einem Maximum der zweiten Stromharmonischen (Iz2) zusammenfallen, wenn der Gleichstromanteil (Izdc) in dem jeweiligen Zweigstrom (Iz) positiv ist, und
   - die Minima der ersten Stromharmonischen (Iz1) jeweils mit einem Minimum der zweiten Stromharmonischen (Iz2) zusammenfallen, wenn der Gleichstromanteil (Izdc) in dem jeweiligen Zweigstrom (Iz) negativ ist.

4. Verfahren nach einem der voranstehenden Ansprüche, **dadurch gekennzeichnet, dass** durch die Ansteuerung der Teilmodule (SM)

   - die Maxima der ersten Stromharmonischen (Iz1) jeweils mit einem Minimum der vierten Stromharmonischen (Iz4) zusammenfallen, wenn der Gleichstromanteil (Izdc) in dem jeweiligen Zweigstrom (Iz) positiv ist, und
   - die Minima der ersten Stromharmonischen (Iz1) jeweils mit einem Maximum der vierten Stromharmonischen (Iz4) zusammenfallen, wenn der Gleichstromanteil (Izdc) in dem jeweiligen Zweigstrom (Iz) negativ ist.

5. Verfahren nach einem der voranstehenden Ansprüche, **dadurch gekennzeichnet, dass** das Amplitudenverhältnis zwischen der Amplitude der vierten Stromharmonischen (Iz4) und der Amplitude der zweiten Stromharmonischen (Iz2) konstant gehalten wird.

6. Verfahren nach einem der voranstehenden Ansprüche, **dadurch gekennzeichnet, dass** das Amplitudenverhältnis zwischen der Amplitude der vierten Stromharmonischen (Iz4) und der Amplitude der zweiten Stromharmonischen (Iz2) in einem Bereich zwischen 0,4 und 0,7 gehalten wird.

7. Verfahren nach einem der voranstehenden Ansprüche, **dadurch gekennzeichnet, dass** der Wert, auf den das Amplitudenverhältnis zwischen der Amplitude der zweiten Stromharmonischen (Iz2) und der Amplitude der ersten Stromharmonischen (Iz1) geregelt wird, derart gewählt wird, dass die elektrischen Verluste des Umrichters (10) minimal werden.

8. Verfahren nach einem der voranstehenden Ansprüche, **dadurch gekennzeichnet, dass** das Amplitudenverhältnis zwischen der Amplitude der zweiten Stromharmonischen (Iz2) und der Amplitude der ersten Stromharmonischen (Iz1) auf einen Wert geregelt wird, der vom Arbeitspunkt des Umrichters (10) abhängig ist.

9. Verfahren nach einem der voranstehenden Ansprüche, **dadurch gekennzeichnet, dass**

das Amplitudenverhältnis zwischen der Amplitude der zweiten Stromharmonischen (Iz2) und der Amplitude der ersten Stromharmonischen (Iz1) auf einen Wert geregelt wird, der vom Leistungsfaktor des Umrichters (10) abhängig ist, insbesondere durch Multiplikation des Leistungsfaktors des Umrichters (10) mit einer Konstanten gebildet wird.

10. Verfahren nach einem der voranstehenden Ansprüche, **dadurch gekennzeichnet, dass** der Wert, auf den das Amplitudenverhältnis zwischen der Amplitude der zweiten Stromharmonischen (Iz2) und der Amplitude der ersten Stromharmonischen (Iz1) geregelt wird, im Rahmen vorheriger Simulationen des Umrichters (10) für verschiedene Arbeitspunkte als optimal ermittelt worden ist, und zwar insbesondere mit Blick auf minimale elektrische Verluste des Umrichters (10) im jeweiligen Arbeitspunkt.

11. Verfahren nach einem der voranstehenden Ansprüche, **dadurch gekennzeichnet, dass** der Wert, auf den das Amplitudenverhältnis zwischen der Amplitude der zweiten Stromharmonischen (Iz2) und der Amplitude der ersten Stromharmonischen (Iz1) geregelt wird, aus einem Speicher ausgelesen wird, in dem für verschiedene Arbeitspunkte der jeweils einzustellende Wert abgespeichert ist.

12. Verfahren nach einem der voranstehenden Ansprüche, **dadurch gekennzeichnet, dass** als Umrichter ein Sechspuls-Multilevelumrichter betrieben wird.

13. Umrichter, insbesondere Multilevelumrichter, der zumindest zwei mit Teilmodulen (SM) ausgestattete Modulzweige (TS) sowie eine Steuereinrichtung (20) aufweist, die

- durch Ansteuerung der Teilmodule (SM) in den Modulzweigen jeweils einen Strom (Iz1) - nachfolgend erste Stromharmonische (Iz1) genannt - erzeugt, der eine vorgegebene Grundfrequenz aufweist, und
- durch Ansteuerung der Teilmodule (SM) des Umrichters (10) einen zusätzlichen, innerhalb des Umrichters (10) fließenden, Kreisstrom - nachfolgend zweite Stromharmonische (Iz2) genannt - erzeugt, der die doppelte Grundfrequenz aufweist,

wobei die Steuereinrichtung (20) derart ausgestaltet ist, dass sie durch Ansteuerung der Teilmodule (SM) einen zusätzlichen, innerhalb des Umrichters (10) fließenden Kreisstrom - nachfolgend vierte Stromharmonische (Iz4) genannt - erzeugt, der die vierfache Grundfrequenz aufweist,

**dadurch gekennzeignet,dass**

die Steuereinrichtung (20) weiterhin ausgestattet ist die zweite Stromharmonische (Iz2) mit einem Vorzeichen des Gleichstromanteils (Izdc) eines jeweiligen Zweigstromes (Iz) zu multiplizieren und im Cosinussystem phasengleich zur ersten Stromharmonischen (Iz1) aufzuschalten und die vierte Stromharmonische (Iz4) mit dem inversen Vorzeichen des Gleichstromanteils (Izdc) des jeweiligen Zweigstromes (Iz) zu multiplizieren und im Cosinussystem phasengleich zur ersten Stromharmonischen aufzuschalten, wobei ein maximaler Betragswert eines natürlichen Zweigstroms um einen Amplitudenwert (Az4) der vierten Stromharmonischen (Iz4) verringert wird.

**Claims**

1. Method for operating a converter (10), particularly a multilevel converter, which has at least two module arms (TS) equipped with sub-modules (SM),

- a current - termed first current harmonic (Iz1) in the following - being generated by activating the sub-modules (SM) in the module arms in each case, which current has a predetermined fundamental frequency, and
- an additional circulating current - termed second current harmonic (Iz2) in the following - flowing within the converter (10), being generated by activating the sub-modules (SM), which additional circulating current has double the fundamental frequency,
an additional circulating current - termed fourth current harmonic (Iz4) in the following - flowing within the converter (10), being generated by activating the sub-modules (SM), which additional circulating current has four-times the fundamental frequency,

**characterized in that**

the second current harmonic (Iz2) is multiplied by a polarity sign of the DC component (Izdc) of a respective arm current (Iz) and injected in the cosine system in phase to the first current harmonic (Iz1) and the fourth current harmonic (Iz4) is multiplied by the inverse polarity sign of the DC component (Izdc) of the respective arm current (Iz) and injected in the cosine system in phase to the first current harmonic, wherein a maximum magnitude value of a natural arm current is reduced by an amplitude value (Az4) of the fourth current harmonic (Iz4) .

2. Method according to one of the preceding claims, **characterized in that**
the phase position of the second current harmonic (Iz2) is kept constant relative to the phase of the first current harmonic (Iz1).

3. Method according to one of the preceding claims, **characterized in that**
the activation of the sub-modules (SM) causes

- the maxima of the first current harmonic (Iz1) in each case to coincide with a maximum of the second current harmonic (Iz2) when the DC component (Izdc) in the respective arm current (Iz) is positive, and
- the minima of the first current harmonic (Iz1) in each case to coincide with a minimum of the second current harmonic (Iz2) when the DC component (Izdc) in the respective arm current (Iz) is negative.

4. Method according to one of the preceding claims, **characterized in that**
due to the activation of the sub-modules (SM)

- the maxima of the first current harmonic (Iz1) in each case coincide with a minimum of the fourth current harmonic (Iz4) when the DC component (Izdc) in the respective arm current (Iz) is positive, and
- the minima of the first current harmonic (Iz1) in each case coincide with a maximum of the fourth current harmonic (Iz4) when the DC component (Izdc) in the respective arm current (Iz) is negative.

5. Method according to one of the preceding claims, **characterized in that**
the amplitude ratio between the amplitude of the fourth current harmonic (Iz4) and the amplitude of the second current harmonic (Iz2) is kept constant.

6. Method according to one of the preceding claims, **characterized in that**
the amplitude ratio between the amplitude of the fourth current harmonic (Iz4) and the amplitude of the second current harmonic (Iz2) is kept within a range between 0.4 and 0.7.

7. Method according to one of the preceding claims, **characterized in that**
the value to which the amplitude ratio between the amplitude of the second current harmonic (Iz2) and the amplitude of the first current harmonic (Iz1) is adjusted is chosen in such a manner that the electrical losses of the converter (10) become minimal.

8. Method according to one of the preceding claims, **characterized in that**
the amplitude ratio between the amplitude of the second current harmonic (Iz2) and the amplitude of the first current harmonic (Iz1) is adjusted to a value which depends on the operating point of the converter (10).

9. Method according to one of the preceding claims, **characterized in that**
the amplitude ratio between the amplitude of the second current harmonic (Iz2) and the amplitude of the first current harmonic (Iz1) is adjusted to a value which depends on the power factor of the converter (10), and in particular is formed by multiplying the power factor of the converter (10) by a constant.

10. Method according to one of the preceding claims, **characterized in that**
the value to which the amplitude ratio between the amplitude of the second current harmonic (Iz2) and the amplitude of the first current harmonic (Iz1) is adjusted has been determined as optimal in the context of previous simulations of the converter (10) for various operating points, specifically in particular with a view to minimal electrical losses of the converter (10) at the respective operating point.

11. Method according to one of the preceding claims, **characterized in that**
the value to which the amplitude ratio between the amplitude of the second current harmonic (Iz2) and the amplitude of the first current harmonic (Iz1) is adjusted is read from storage in which the value to be set for various operating points in each case is stored.

12. Method according to one of the preceding claims, **characterized in that**
the converter operated is a six-pulse multilevel converter.

**13.** Converter, particularly a multilevel converter, which has at least two module arms (TS) equipped with sub-modules (SM) and also a control device (20), which

- in each case generates a current (Iz1) - termed first current harmonic (Iz1) in the following - by activating the sub-modules (SM) in the module arms, which current has a predetermined fundamental frequency, and
- generates an additional circulating current - termed second current harmonic (Iz2) in the following - flowing within the converter (10), by activating the sub-modules (SM) of the converter (10), which additional circulating current has double the fundamental frequency,

the control device (20) being configured in such a manner that, by activating the sub-modules (SM), it generates an additional circulating current - termed fourth current harmonic (Iz4) in the following - flowing within the converter (10), which additional circulating current has four-times the fundamental frequency,

**characterized in that**

the control device (20) is furthermore equipped to multiply the second current harmonic (Iz2) by a polarity sign of the DC component (Izdc) of a respective arm current (Iz) and inject it in the cosine system in phase to the first current harmonic (Iz1) and to multiply the fourth current harmonic (Iz4) by the inverse polarity sign of the DC component (Izdc) of the respective arm current (Iz) and inject it in the cosine system in phase to the first current harmonic, wherein a maximum magnitude value of a natural arm current is reduced by an amplitude value (Az4) of the fourth current harmonic (Iz4) .

**Revendications**

**1.** Procédé pour faire fonctionner un onduleur (10), en particulier un onduleur à plusieurs niveaux, qui a au moins deux branches (TS) de module équipées de modules (SM) partiels,

- dans lequel, en commandant les modules (SM) partiels dans les branches de modules, on produit respectivement un courant - désigné dans ce qui suit par première harmonique (Iz1) de courant - qui a une fréquence fondamentale donnée à l'avance, et
- dans lequel, en commandant les modules (SM) partiels, on produit un courant circulaire supplémentaire - désigné dans ce qui suit par deuxième harmonique (Iz2) de courant - passant dans l'onduleur (10), qui a le double de la fréquence fondamentale,

en commandant les modules (SM) partiels, on produit un courant circulaire supplémentaire - désigné dans ce qui suit par quatrième harmonique (Iz4) de courant - passant dans l'onduleur (10), qui a quatre fois la fréquence fondamentale,

**caractérisé en ce que**

l'on multiplie le deuxième harmonique (Iz2) de courant par un signe de la composante (Izdc) de courant continu d'un courant (Iz) de branche respectif et on l'applique dans le système cosinus en phase avec le premier harmonique (Iz1) de courant et on multiplie le quatrième harmonique (Iz4) de courant par le signe inverse de la composante (Izdc) de courant continu du courant (Iz) de branche respectif et on l'applique dans le système cosinus en phase avec le premier harmonique de courant, dans lequel on diminue, d'une valeur (Az4) d'amplitude du quatrième harmonique (Iz4) de courant, une valeur absolue maximum d'un courant de branche naturel.

**2.** Procédé suivant l'une des revendications précédentes, **caractérisé en ce que**
l'on maintient constante la position en phase du deuxième harmonique (Iz2) de courant par rapport à la phase du premier harmonique (Iz1) de courant.

**3.** Procédé suivant l'une des revendications précédentes, **caractérisé en ce que**,
en commandant les modules (SM) partiels, on fait que

- les maximums des premiers harmoniques (Iz1) de courant coïncident respectivement avec un maximum des deuxièmes harmoniques (Iz2) de courant, si la composante (Izdc) de courant continu dans le courant (Iz) de branche respectif est positive, et
- les minimums des premiers harmoniques (Iz1) de courant coïncident respectivement avec un minimum des deuxièmes harmoniques (Iz2) de courant, si la composante (Izdc) de courant continu dans le courant (Iz) de branche respectif est négative.

**4.** Procédé suivant l'une des revendications précédentes, **caractérisé en ce que**,
en commandant les modules (SM) partiels,

- les maximums des premiers harmoniques (Iz1) de courant coïncident respectivement avec un minimum des quatrièmes harmoniques (Iz4) de courant, si la composante (Izdc) de courant continu dans le courant (Iz) de branche respectif est positive, et
- les minimums des premiers harmoniques (Iz1) de courant coïncident respectivement avec un maximum des quatrièmes harmoniques (Iz4) de courant, si la composante (Izdc) de courant continu dans le courant (Iz) de branche respectif est négative.

5. Procédé suivant l'une des revendications précédentes, **caractérisé en ce que**
l'on maintient à une valeur constante le rapport des amplitudes entre l'amplitude des quatrièmes harmoniques (Iz4) de courant et l'amplitude des deuxièmes harmoniques (Iz2) de courant.

6. Procédé suivant l'une des revendications précédentes, **caractérisé en ce que**
l'on maintient le rapport des amplitudes entre l'amplitude des quatrièmes harmoniques (Iz4) de courant et l'amplitude des deuxièmes harmoniques (Iz2) de courant dans une plage comprise entre 0,4 et 0,7.

7. Procédé suivant l'une des revendications précédentes, **caractérisé en ce que**
l'on choisit la valeur sur laquelle on règle le rapport des amplitudes entre l'amplitude des deuxièmes harmoniques (Iz2) de courant et l'amplitude des premiers harmoniques (Iz1) de courant, de manière à minimiser les pertes électriques de l'onduleur (10).

8. Procédé suivant l'une des revendications précédentes, **caractérisé en ce que**
l'on règle le rapport des amplitudes, entre l'amplitude des deuxièmes harmoniques (Iz2) de courant et l'amplitude des premiers harmoniques (Iz1) de courant, à une valeur, qui dépend du point de travail de l'onduleur (10).

9. Procédé suivant l'une des revendications précédentes, **caractérisé en ce que**
l'on règle le rapport des amplitudes, entre l'amplitude des deuxièmes harmoniques (Iz2) de courant et l'amplitude des premiers harmoniques (Iz1) de courant, à une valeur, qui dépend du facteur de puissance de l'onduleur (10), qui est formée, en particulier en multipliant le facteur de puissance de l'onduleur (10) par une constante.

10. Procédé suivant l'une des revendications précédentes, **caractérisé en ce que**
la valeur, à laquelle on règle le rapport des amplitudes entre l'amplitude des deuxièmes harmoniques (Iz2) de courant et l'amplitude des premiers harmoniques (Iz1) de courant, a été déterminée comme la meilleure pour divers points de travail dans le cadre d'autres simulations antérieures de l'onduleur (10) et cela, en particulier en vue de pertes électriques minimums de l'onduleur (10) en chaque point de travail.

11. Procédé suivant l'une des revendications précédentes, **caractérisé en ce que**
l'on extrait la valeur, sur laquelle on règle le rapport des amplitudes entre l'amplitude des deuxièmes harmoniques (Iz2) de courant et l'amplitude des premiers harmoniques (Iz1) de courant, d'une mémoire, dans laquelle on met en mémoire la valeur à régler respectivement pour divers points de travail.

12. Procédé suivant l'une des revendications précédentes, **caractérisé en ce que**
l'on fait fonctionner, comme onduleur, un onduleur à plusieurs niveaux à six impulsions.

13. Onduleur, en particulier onduleur à plusieurs niveaux, qui a au moins deux branches (TS) de module équipées de modules (SM) partiels ainsi qu'un dispositif (20) de commande, qui

- par commande des modules (SM) partiels dans les branches de module, on produit respectivement un courant (Iz1) - désigné dans ce qui suit par première harmonique (Iz1) de courant - qui a une fréquence fondamentale donnée à l'avance, et
- par commande des modules (SM) partiels de l'onduleur (10), on produit un courant circulaire supplémentaire - désigné dans ce qui suit par deuxième harmonique (Iz2) de courant - passant dans l'onduleur (10), qui a le double de la fréquence fondamentale
dans lequel le dispositif (20) de commande est conformé de manière à produire, par commande des modules (SM) partiels, un courant circulaire supplémentaire - désigné dans ce qui suit par quatrième harmonique (Iz4) de courant - passant dans l'onduleur (10), qui a quatre fois la fréquence fondamentale,
**caractérisé en ce que**
le dispositif (20) de commande est équipé en outre pour multiplier le deuxième harmonique (Iz2) de courant par un signe de la composante (Izdc) de courant continu d'un courant (Iz) de branche respectif et pour l'appliquer dans le système cosinus en phase avec le premier harmonique (Iz1) de courant et on multiplie le quatrième harmonique (Iz4) de courant par le signe inverse de la composante (Izdc) de courant continu du courant (Iz) de branche respectif et on l'applique dans le système cosinus en phase avec le premier harmonique de courant, dans lequel on diminue, d'une valeur (Az4) d'amplitude du quatrième harmonique (Iz4) de courant, une valeur absolue maximum d'un courant de branche naturel.

# FIG 1

# FIG 2

# FIG 3

FIG 4

# FIG 5

EP 3 902 128 B1

FIG 6

FIG 7

**IN DER BESCHREIBUNG AUFGEFÜHRTE DOKUMENTE**

**In der Beschreibung aufgeführte Patentdokumente**

- WO 2013071947 A1

**In der Beschreibung aufgeführte Nicht-Patentliteratur**

- Modular Multilevel Converter: An universal concept for HVDC-Networks and extended DC-Bus-applications. **R. MARQUARDT.** The 2010 International Power Electronics Conference, 978-1-4244-5393-1/10. IEEE, 2010

- **YANG, LI ; LI, WANG ; XU, GOU.** Loss optimization of MMC by Second-order-Harmonic Circulating Injection. *IEEE Transactions on Power Electronics*